# EUROPEAN PATENT APPLICATION

(11) **EP 4 800 561 A1**
(43) Date of publication of application: **02.09.2026**
(21) Application number: 24890572.1
(22) Date of filing: 08.11.2024
(51) Int. Cl.: G06F 11/36

(54) **CODE TESTING METHOD AND RELATED SYSTEM**

(30) Priority: 16.11.2023 CN 202311544456; 13.12.2023 CN 202311713742
(71) Applicant: Huawei Cloud Computing Technologies Co., Ltd., Gui'an New District, Guizhou 550025 (CN)
(72) Inventor: ZHAO, Haixia, Guiyang, Guizhou 550025 (CN); YE, Tong, Guiyang, Guizhou 550025 (CN); ZHU, Xiaoli, Guiyang, Guizhou 550025 (CN); ZHOU, Jianyi, Guiyang, Guizhou 550025 (CN); WU, Tianyong, Guiyang, Guizhou 550025 (CN)
(74) Representative: Epping - Hermann - Fischer
(86) International application number: PCT/CN2024/130711
(87) International publication number: WO 2025/103216

(57) **Abstract**

This application provides a code testing method, applied to a code testing system. During generation of test code, context information of to-be-tested code is extracted, and the test code is generated based on the context information of the to-be-tested code. Because the context information usually has a service meaning and can reflect a test scenario, prior knowledge of a service and the test scenario is available in a process of generating the test code, and test code of higher quality can be generated.

## Description

This application claims priorities to Chinese Patent Application No. 202311544456.X, filed with the China National Intellectual Property Administration on November 16, 2023 and entitled "DATA PROCESSING METHOD AND RELATED DEVICE", and to Chinese Patent Application No. 202311713742.4, filed with the China National Intellectual Property Administration on December 13, 2023 and entitled "CODE TESTING METHOD AND RELATED SYSTEM", both of which are incorporated herein by reference in their entireties.

### TECHNICAL FIELD

This application relates to the field of artificial intelligence (artificial intelligence, AI) technologies, and in particular, to a code testing method and system, a compute device cluster, a computer-readable storage medium, and a computer program product.

### BACKGROUND

Code testing can ensure quality of software engineering, and constitutes an important part of software development. During a development process, time is mainly allocated to four parts: code writing, code fixing, code refactoring, and code testing. Code testing takes more than 15% of the time, requiring developers to spend a large amount of time and energy in writing test code. To save development time, technologies of automatically generating test code have gained increasing attention in recent years.

A large language model is a machine learning model with a large quantity of parameters. Large language model-based test generation technologies mainly use a large language model to generate test code corresponding to the to-be-tested code according to a code set related to code (including to-be-tested code), and perform weight parameter training on the large model by using the code set related to the code. Although such test generation technologies are not highly interpretable, they outperform conventional algorithms in terms of a code feature abstraction capability, richness of generated cases, and a fusion capability of different modal inputs.

However, in a conventional technology, during test code generation, the entire code of a code file related to to-be-tested code is fed as an input sample into the language model. Consequently, the language model parses code data roughly, and quality of the generated test code is poor.

### SUMMARY

This application provides a code testing method, so that quality of generated test code is higher. This application further provides a code testing system corresponding to the foregoing method, a compute device cluster, a computer-readable storage medium, and a computer program product.

According to a first aspect, this application provides a code testing method. The method is applied to a code testing system. The code testing system may be a software system. The software system may be deployed in a compute device cluster, for example, deployed in a cloud computing cluster provided by a cloud service provider, or deployed in an edge computing cluster. The compute device cluster executes program code of the software system, to perform the code testing method in this application. In some possible implementations, the code testing system may alternatively be a hardware system, for example, a compute device cluster having an unknown test code generation function. When the hardware system runs, the code testing method in this application is performed.

Specifically, the method includes: receiving a test command for first code, where the first code is code in a to-be-edited program, and the test command indicates to generate test code by using a language model; obtaining information about the first code from a file associated with the first code, where the information about the first code includes context information of a function included in the first code and one or more of the following information: context information of the file associated with the first code, context information of a project in which the first code is located, or context information of a test framework used for the first code, where the information about the first code is used to construct a prompt prompt that is used as an input of the language model, and the first test code is obtained based on the prompt prompt by using the language model; obtaining, based on the information about the first code, first test code corresponding to the first code; and testing the first code based on the first test code.

According to this, in this application, during generation of the test code, context information related to the to-be-tested code is extracted. Because the context information usually has a service meaning and can reflect a test scenario, prior knowledge of a service and the test scenario is available in a process of generating the test code, and test code of higher quality can be generated. In addition, in this application, in addition to a function-level context, context information with a coarser granularity than the function-level context is further extracted. Test code is generated by using context information of a plurality of levels, so that prior knowledge of a service and a test scenario is richer, and quality of the generated test code is higher.

In a possible implementation, the context information of the function included in the first code includes at least one of a type to which an input parameter of the included function belongs, a return value type of the function, and a method call in a function body.

In a possible implementation, the context information of the file associated with the first code includes at least one of a variable name, structure information, an object name, an object definition, a member variable of a class, a member function of the class, a construction method of the class, and an inheritance relationship of the class of the file associated with the first code.

In a possible implementation, the context information of the project in which the first code is located includes statistics information or a type of a programming language of the project in which the first code is located.

In a possible implementation, the context information of the test framework used for the first code includes a type of the test framework used for the first code or a type of a mock framework.

In a possible implementation, a first prompt that indicates the language model to generate test code of the first code based on the information about the first code may be sent to a compute device on a cloud side. The compute device on the cloud side may obtain, based on the first prompt by using the language model, the first test code corresponding to the first code, and a terminal side may receive the first test code that corresponds to the first code and that is obtained by the compute device on the cloud side.

In a possible implementation, the compute device on the terminal side or the cloud side may obtain, based on the first prompt by using the language model, the first test code corresponding to the first code.

In a possible implementation, the obtaining the information about the first code includes: obtaining a first prompt prompt including the information about the first code, where the first prompt indicates the language model to generate the test code of the first code based on the information about the first code; and the obtaining, based on the information about the first code, the first test code corresponding to the first code includes: sending the first prompt, and receiving the first test code that corresponds to the first code and that is obtained based on the first prompt; or obtaining, based on the first prompt by using the language model, the first test code corresponding to the first code.

In a possible implementation, the first code is function-level code, class-level code, or file-level code.

In a possible implementation, the obtaining the information about the first code includes: when the test command for the first code on a code editing interface is received, obtaining the information about the first code, where the test command indicates to generate the test code for the first code based on the language model.

In this embodiment of this application, the large language model may have a multi-code language processing capability, that is, a multi-code language test code generation capability, that is, generate corresponding test code for to-be-tested code of a plurality of different code language types. For example, information about second code may be obtained, where the second code and the first code are of programming languages of different types; and second test code is obtained based on the information about the second code by using the language model, where the first test code and the first code are of programming languages of a same type, and the second test code and the second code are of programming languages of a same type. Similar to the first code, the information about the second code may include context information of a function included in the second code and at least one of the following information: context information of a file associated with the second code, context information of a project in which the second code is located, or context information of a test framework used for the second code.

In a possible implementation, test samples of different code languages may be constructed during training, so that a trained language model has a multi-code language processing capability, that is, a multi-code language test code generation capability.

In a possible implementation, the method further includes: updating the language model based on the first test code and third test code corresponding to the first code, where the third test code is used as a truth value of the test code of the first code.

According to a second aspect, this application provides a code testing method. The method includes:
receiving a test command for first code, where the first code is code in a to-be-edited program, and the test command indicates to generate test code by using a language model; obtaining a second prompt, where the second prompt indicates the language model to extract information about the first code from a file of the first code, and generate test code of the first code based on the information about the first code; and the information about the first code includes context information of a function included in the first code and one or more of the following information: context information of a file associated with the first code, the context information of the file associated with the first code, context information of a project in which the first code is located, or context information of a test framework used for the first code;
obtaining, based on the second prompt, first test code corresponding to the first code; and testing the first code based on the first test code.

Different from the embodiment corresponding to the first aspect, the language model may be guided to extract the context information based on the prompt.

In a possible implementation, the context information of the function included in the first code includes at least one of a type to which an input parameter of the included function belongs, a return value type of the function, and a method call in a function body;
the context information of the file associated with the first code includes at least one of a variable name, structure information, an object name, an object definition, a member variable of a class, a member function of the class, a construction method of the class, and an inheritance relationship of the class of the file associated with the first code;
the context information of the project in which the first code is located includes statistics information or a type of a programming language of the project in which the first code is located; or
the context information of the test framework used for the first code includes a type of the test framework used for the first code or a type of a mock framework.

In a possible implementation, the obtaining, based on the second prompt, the first test code corresponding to the first code includes:
sending the second prompt, and receiving the first test code that corresponds to the first code and that is obtained based on the second prompt; or
obtaining, based on the second prompt by using the language model, the first test code corresponding to the first code.

According to a third aspect, this application provides a sample providing method. The method includes: obtaining a code set; obtaining a training sample of the language model based on the code set, where the training sample includes the first code and the third test code that are extracted from the code set, the code set is adapted to a first test framework, the first test framework indicates a constraint of a test function that can be used as a to-be-tested function, the constraint includes a constraint of the test function and a constraint of a call relationship between the test function and the to-be-tested function, the third test code meets the constraint of the test function, and a call relationship between the third test code and the first code meets the constraint of the call relationship, where the third test code is used as a truth value of the test code of the first code.

The training sample extracted from the code set may include to-be-tested code (for example, the first code) and a truth value (for example, the third test code) of the test code corresponding to the first code. To extract a high-quality training sample, in this embodiment of this application, based on a preset test framework, code that meets a constraint specified by the test framework is extracted from the code set as the training sample.

The test framework indicates a constraint of a test function that can be used as a to-be-tested function, and the constraint includes a constraint of the test function and a constraint of a call relationship between the test function and the to-be-tested function.

Due to different code language types, or even different code writing manners of a same language, different code sets may be adapted to different test frameworks. The "test framework adapted to the code set" herein may be understood as a constraint that needs to be met by a pair of the to-be-tested function and the test function in a language and a writing manner of the code set.

After the code set is obtained, a test framework (that is, the first test framework in this embodiment of this application) that is adapted to the code set may be determined from a plurality of preset test frameworks. A test framework feature library may be constructed based on the plurality of preset test frameworks offline. By constructing the test framework feature library offline, a data collection range is expanded, and diversity of training data can be increased. In addition, generalization and extensibility are enhanced, and the preset test frameworks can be widely applied to various test model training and inference in a plurality of languages (for example, Java, Python, Go, Cxx, JS, and Ts). During training sample extraction, automatic analysis can be performed without manual definition of templates and constraints, which reduces test costs and is more practical and universal.

In a possible implementation, the constraint of the call relationship includes at least one of the following: A direct call relationship exists, a multi-level call relationship exists, or an anonymous call relationship exists.

In a possible implementation, the obtaining the training sample of the language model based on the code set includes:
obtaining, from the code set, the third test code that meets the constraint of the test function; and
when the first code is called for the third test code in the code set, and the call relationship meets the constraint of the call relationship, using the third test code as the truth value of the test code of the first code.

In a possible implementation, the code set includes a plurality of pieces of code that are called for the third test code and whose call relationship meets the constraint of the call relationship; and the first code is code that is in the plurality of pieces of code and that has a highest similarity to the third test code.

In a possible implementation, the obtaining the training sample of the language model based on the code set includes:
obtaining, from the code set, the third test code that meets the constraint of the test function, where the third test code includes an assert;
determining a target variable included in the assert; and
when a value is assigned to the target variable by calling the first code, and the call relationship between the first code and the third test code meets the constraint of the call relationship, using the third test code as the truth value of the test code of the first code.

In a possible implementation, the method further includes:
updating the language model based on the first test code and the third test code.

According to a fourth aspect, this application provides a code testing apparatus. The apparatus includes:
an obtaining module, configured to receive a test command for first code, where the first code is code in a to-be-edited program, and the test command indicates to generate test code by using a language model; and obtain information about the first code from a file associated with the first code, where the information about the first code includes context information of a function included in the first code and one or more of the following information: context information of the file associated with the first code, the context information of the file associated with the first code, context information of a project in which the first code is located, or context information of a test framework used for the first code, where the information about the first code is used to construct a prompt prompt that is used as an input of the language model, and the first test code is obtained based on the prompt prompt by using the language model; and
a processing module, configured to obtain, based on the information about the first code, first test code corresponding to the first code.

In a possible implementation, the context information of the function included in the first code includes at least one of a type to which an input parameter of the included function belongs, a return value type of the function, and a method call in a function body;
the context information of the file associated with the first code includes at least one of a variable name, structure information, an object name, an object definition, a member variable of a class, a member function of the class, a construction apparatus of the class, and an inheritance relationship of the class of the file associated with the first code;
the context information of the project in which the first code is located includes statistics information or a type of a programming language of the project in which the first code is located; or
the context information of the test framework used for the first code includes a type of the test framework used for the first code or a type of a mock framework.

In a possible implementation, the processing module is specifically configured to:
send the information about the first code, and receive the first test code that corresponds to the first code and that is obtained based on the information about the first code; or
obtain, based on the information about the first code by using the language model, the first test code corresponding to the first code.

In a possible implementation, the obtaining the information about the first code includes: obtaining a first prompt prompt including the information about the first code, where the first prompt indicates the language model to generate test code of the first code based on the information about the first code.

The processing module is specifically configured to:
send the first prompt, and receive the first test code that corresponds to the first code and that is obtained based on the first prompt; or
obtain, based on the first prompt by using the language model, the first test code corresponding to the first code.

In a possible implementation, the first code is function-level code, class-level code, or file-level code.

In a possible implementation, the obtaining module is specifically configured to:
when the test command for the first code on a code editing interface is received, obtain the information about the first code, where the test command indicates to generate the test code for the first code based on the language model.

In a possible implementation, the obtaining module is further configured to:
obtain information about second code, where the second code and the first code are of programming languages of different types; and
the processing module is further configured to obtain second test code based on the second prompt, where the first test code and the first code are of programming languages of a same type, and the second test code and the second code are of programming languages of a same type.

In a possible implementation, the processing module is further configured to:
update the language model based on the first test code and third test code corresponding to the first code, where the third test code is used as a truth value of the test code of the first code.

In a possible implementation, the obtaining module is further configured to obtain a code set; and
the processing module is further configured to obtain a training sample of the language model based on the code set, where the training sample includes the first code and the third test code that are extracted from the code set, the code set is adapted to a first test framework, the first test framework indicates a constraint of a test function that can be used as a to-be-tested function, the constraint includes a constraint of the test function and a constraint of a call relationship between the test function and the to-be-tested function, the third test code meets the constraint of the test function, and a call relationship between the third test code and the first code meets the constraint of the call relationship.

In a possible implementation, the processing module is specifically configured to obtain, from the code set, the third test code that meets the constraint of the test function; and
when the first code is called for the third test code in the code set, and the call relationship meets the constraint of the call relationship, use the third test code as the truth value of the test code of the first code.

In a possible implementation, the processing module is specifically configured to obtain, from the code set, the third test code that meets the constraint of the test function, where the third test code includes an assert;
determine a target variable included in the assert; and
when a value is assigned to the target variable by calling the first code, and the call relationship between the first code and the third test code meets the constraint of the call relationship, use the third test code as the truth value of the test code of the first code.

According to a fifth aspect, this application provides a code testing apparatus. The apparatus includes:
an obtaining module, configured to receive a test command for first code, where the first code is code in a to-be-edited program, and the test command indicates to generate test code by using a language model; and obtain a second prompt, where the second prompt indicates the language model to extract information about the first code from a file of the first code, and generate test code of the first code based on the information about the first code; and the information about the first code includes context information of a function included in the first code and one or more of the following information: context information of a file associated with the first code, the context information of the file associated with the first code, context information of a project in which the first code is located, or context information of a test framework used for the first code; and
a processing module, configured to obtain, based on the second prompt, first test code corresponding to the first code.

In a possible implementation, the context information of the function included in the first code includes at least one of a type to which an input parameter of the included function belongs, a return value type of the function, and a method call in a function body;
the context information of the file associated with the first code includes at least one of a variable name, structure information, an object name, an object definition, a member variable of a class, a member function of the class, a construction apparatus of the class, and an inheritance relationship of the class of the file associated with the first code;
the context information of the project in which the first code is located includes statistics information or a type of a programming language of the project in which the first code is located; or
the context information of the test framework used for the first code includes a type of the test framework used for the first code or a type of a mock framework.

In a possible implementation, the processing module is specifically configured to:
send the second prompt, and receive the first test code that corresponds to the first code and that is obtained based on the second prompt; or
obtain, based on the second prompt by using the language model, the first test code corresponding to the first code.

According to a sixth aspect, this application provides a sample providing apparatus. The apparatus includes:
an obtaining module, configured to obtain a code set;
a processing module, configured to obtain a training sample of the language model based on the code set, where the training sample includes the first code and the third test code that are extracted from the code set, the code set is adapted to a first test framework, the first test framework indicates a constraint of a test function that can be used as a to-be-tested function, the constraint includes a constraint of the test function and a constraint of a call relationship between the test function and the to-be-tested function, the third test code meets the constraint of the test function, and a call relationship between the third test code and the first code meets the constraint of the call relationship, where the third test code is used as a truth value of the test code of the first code.

In a possible implementation, the constraint of the call relationship includes at least one of the following: A direct call relationship exists, a multi-level call relationship exists, or an anonymous call relationship exists.

In a possible implementation, the processing module is specifically configured to:
obtain, from the code set, the third test code that meets the constraint of the test function; and
when the first code is called for the third test code in the code set, and the call relationship meets the constraint of the call relationship, use the third test code as the truth value of the test code of the first code.

In a possible implementation, the code set includes a plurality of pieces of code that are called for the third test code and whose call relationship meets the constraint of the call relationship; and the first code is code that is in the plurality of pieces of code and that has a highest similarity to the third test code.

In a possible implementation, the processing module is specifically configured to:
obtain, from the code set, the third test code that meets the constraint of the test function, where the third test code includes an assert;
determine a target variable included in the assert; and
when a value is assigned to the target variable by calling the first code, and the call relationship between the first code and the third test code meets the constraint of the call relationship, use the third test code as the truth value of the test code of the first code.

In a possible implementation, the processing module is further configured to:
update the language model based on the first test code and the third test code.

According to a seventh aspect, this application provides a compute device cluster. The compute device cluster includes at least one compute device, and the at least one compute device includes at least one processor and at least one memory. The at least one processor and the at least one memory communicate with each other. The at least one processor is configured to execute instructions stored in the at least one memory, to enable the compute device or the compute device cluster to perform the method in any one of the first aspect or the implementations of the first aspect, the method in any one of the second aspect or the implementations of the second aspect, or the method in any one of the third aspect or the implementations of the third aspect.

According to an eighth aspect, this application provides a computer-readable storage medium. The computer-readable storage medium stores instructions, and the instructions instruct a compute device or a compute device cluster to perform the code testing method in any one of the first aspect or the implementations of the first aspect, the method in any one of the second aspect or the implementations of the second aspect, or the method in any one of the third aspect or the implementations of the third aspect.

According to a ninth aspect, this application provides a computer program product including instructions. When the computer program product runs on a compute device or a compute device cluster, the compute device or the compute device cluster is enabled to perform the code testing method in any one of the first aspect or the implementations of the first aspect, the method in any one of the second aspect or the implementations of the second aspect, or the method in any one of the third aspect or the implementations of the third aspect.

In this application, based on the implementations in the foregoing aspects, the implementations may be further combined to provide more implementations.

### BRIEF DESCRIPTION OF DRAWINGS

To describe the technical methods in embodiments of this application more clearly, the following briefly describes the accompanying drawings for describing embodiments.
FIG. 1 is a diagram of an architecture of a code testing system according to an embodiment of this application;
FIG. 2a is a diagram of an architecture of a code testing system according to an embodiment of this application;
FIG. 2b is a diagram of an architecture of a model training system according to an embodiment of this application;
FIG. 2c is a diagram of an architecture of a model training system according to an embodiment of this application;
FIG. 3a is a diagram of a code testing method according to an embodiment of this application;
FIG. 3b is a diagram of a code testing method according to an embodiment of this application;
FIG. 4 is a diagram of a code testing method according to an embodiment of this application;
FIG. 5 is a diagram of a training sample providing method according to an embodiment of this application;
FIG. 6 is a diagram of a code testing method according to an embodiment of this application;
FIG. 7 is a diagram of a code testing method according to an embodiment of this application;
FIG. 8 is a diagram of a code testing method according to an embodiment of this application;
FIG. 9 is a diagram of a code testing method according to an embodiment of this application;
FIG. 10 is a diagram of a test tool interface according to an embodiment of this application; and
FIG. 11 to FIG. 13 are diagrams of code testing apparatuses according to embodiments of this application.

### DESCRIPTION OF EMBODIMENTS

The terms "first" and "second" in embodiments of this application are merely intended for description, and shall not be understood as an indication or implication of relative importance or an implicit indication of a quantity of indicated technical features. Therefore, a feature limited by "first" or "second" may explicitly or implicitly include one or more features.

First, some technical terms in embodiments of this application are described.

Code testing can ensure quality of software engineering, and is an important part of software development. During a development process, time is mainly allocated to four parts: code writing, code fixing, code refactoring, and code testing. Code testing takes more than 15% of the time. The developer needs to spend a large amount of time and energy to write test code. To save development time, a technology of automatically generating test code has been increasingly valued in recent years.

Currently, there are many tools for automatically generating test code. Different information related to to-be-tested code needs to be input for different technologies, so that corresponding test code can be output. Common existing technologies include random test generation, symbolic execution-based test generation, search-based test generation, large language model-based test generation, and the like.

A large language model is a machine learning model with a large quantity of parameters. A large language model-based test generation technology is mainly to generate, based on a code set related to code (including to-be-tested code), test code corresponding to the to-be-tested code by using the large language model, and perform weight parameter training on the large model by using the code set related to the code. Although the large natural language model-based test generation technology is not highly interpretable, the technology is unparalleled over a conventional algorithm in terms of an abstraction capability of code features, richness of generated cases, and a fusion capability of different modal inputs.

However, in a conventional technology, in a process of generating test code, a sample input into the language model is all code of a code file related to to-be-tested code. Consequently, the language model parses code data roughly, and quality of the generated test code is poor.

In view of this, this application provides a code testing method. The method may be performed by a code testing system (which may also be referred to as a test code generator). The code testing system is configured to generate corresponding test code based on to-be-tested code. The code testing system may be a software system. The software system may be deployed in a compute device cluster, for example, deployed in a cloud computing cluster provided by a cloud service provider, or deployed in an edge computing cluster. The compute device cluster executes program code of the software system, to perform the code testing method in this application. Alternatively, the software system may be integrated into software having a test code generation function, for example, may be in a form of a functional module like a plug-in in the software. Alternatively, the software system may be independent of the software having the test code generation function, and the software having the test code generation function calls the software system to implement the test code generation function. The software system may be deployed on a compute device, for example, deployed on a terminal device (which may also be referred to as a terminal for short) like a desktop computer, a notebook computer, a tablet computer, or a smartphone. The compute device executes the program code of the software system, to perform the code testing method in this application. In some possible implementations, the code testing system may alternatively be a hardware system, for example, a compute device cluster having a test code generation function. When the hardware system runs, the code testing method in this application is performed.

Specifically, during generation of test code, context information of to-be-tested code is extracted. Because the context information usually has a service meaning and can reflect a test scenario, prior knowledge of a service and the test scenario is available in a process of generating the test code, and test code of higher quality can be generated.

In particular, when the context information is used as a prompt input into the large language model, a testing method name and a variable name generated by the large language model can have the service meaning and reflect the test scenario, and the large model can generate an effective initial value of a test input, to improve quality of the generated test code.

In addition, this application provides a training sample providing method. The method may be performed by a training sample providing system. The training sample providing system is configured to identify, from a code set, a training sample that can be used for a language model, where the training sample includes source code and corresponding to-be-tested code. The training sample providing system may be a software system. The software system may be deployed in a compute device cluster, for example, deployed in a cloud computing cluster provided by a cloud service provider, or deployed in an edge computing cluster. The compute device cluster executes program code of the software system, to perform the training sample providing method in this application. In some possible implementations, the training sample providing system may alternatively be a hardware system, for example, a compute device cluster having a training sample providing function. When the hardware system runs, the training sample providing method in this application is performed.

In addition, this application provides a model training method. The method may be performed by a model training system. The model training system is configured to identify, from a code set, a training sample that can be used for a language model, where the training sample includes source code and corresponding to-be-tested code. The model training system may be a software system. The software system may be deployed in a compute device cluster, for example, deployed in a cloud computing cluster provided by a cloud service provider, or deployed in an edge computing cluster. The compute device cluster executes program code of the software system, to perform the model training method in this application. In some possible implementations, the model training system may alternatively be a hardware system, for example, a compute device cluster having a model training function. When the hardware system runs, the model training method in this application is performed.

To make the technical solutions of this application clearer and easier to understand, the following describes a system architecture of this application with reference to the accompanying drawings.

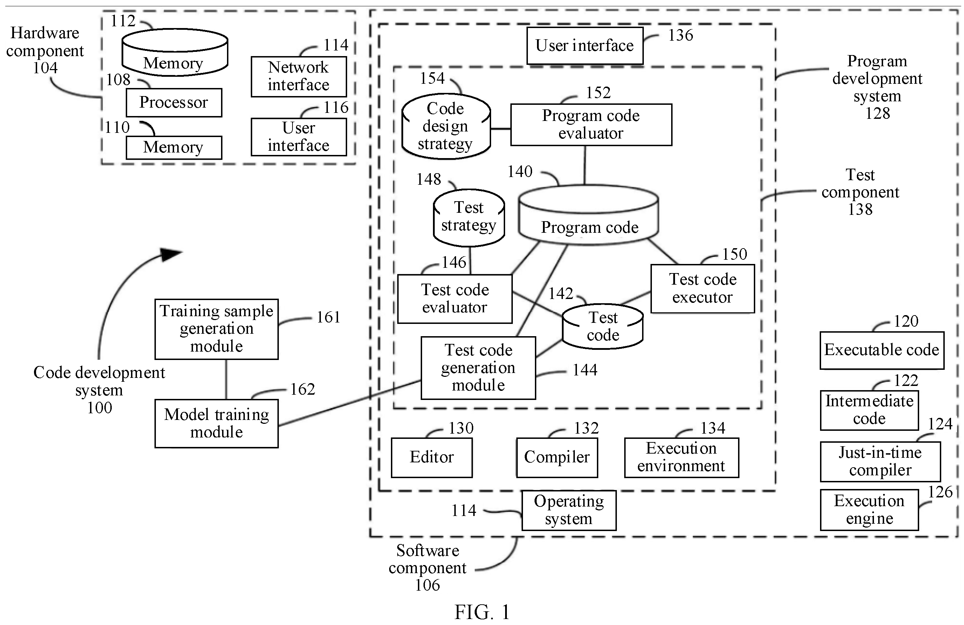

FIG. 1 is an illustration of an implementation 100 of system code development (for example, a code development system 100 shown in FIG. 1). The implementation 100 is a simplified example of a device that can be configured to write, edit, test, and debug computer-executable code.

The illustration in FIG. 1 shows various functional components of the system. In some cases, a component may be a hardware component, a software component, or a combination of hardware and software. Some components may be application layer software, while other components may be operating system layer components. In some cases, a connection from one component to another component may be a tight connection, where two or more components operate on a single hardware platform. In other cases, the connection may be performed through a long-distance network connection. Each implementation may use different hardware, software, and interconnection architectures to implement the described functions.

The implementation 100 is an example of a system that can be configured to develop software, firmware, or other executable code. A final product developed on the system of the implementation 100 may be referred to as application code. As used in this specification and the claims, the application code is a software product tested by using test code. As used in embodiments of this application, the test code is software used to test the application code. Generally, the test code is not delivered with the application code and is not used when an application is executed.

A software development system may be configured to generate the test code, and the test code may then be automatically evaluated to determine a quality metric of the test code. In many cases, the test code may be manually created and then evaluated to generate the quality metric. An analysis on the test code may be to determine various features or aspects of the test code, to establish the quality metric.

Various analyses that can be performed on the test code are used, so that the quality metric may be used to determine how "good" the test code is. The quality metric may be used to identify parts that are of the test code and that may be defective and to provide a confidence metric in a test result.

For example, a high quality metric may be given to test code that scores high in the analysis. When application code is executed, the result of the test code may be considered as a representation of good quality of the application code. Conversely, a result of test code with a poor quality metric may represent a problem.

Modules in the code development system 100 shown in FIG. 1 may belong to one independent compute device or separate compute devices, for example, a part of the modules belong to one compute device, and the other part belongs to another compute device. Even, the module may be further divided into different submodules, and a plurality of submodules may collaboratively implement a function of the corresponding module.

The compute device may be a general-purpose computer (or a compute device cluster on a cloud side) having a hardware component 104 and a software component 106. The compute device may have several tools that can be used to develop the application code and can be used by a programmer or an application developer.

In some implementations, the compute device may be similar to a device on which the application is to be executed. In this case, the compute device may represent a personal computer or another similar device.

In other implementations, the compute device may be a development platform for software or firmware that can be executed on different devices. For example, the compute device may be configured to develop and test software that can be executed on another type of computer device, like a cellular phone or another device with a computer processor. In such implementations, the compute device may include an emulator or simulator that simulates an operation of an expected device. Such an emulator may allow the application code to be tested and executed before being installed and running on expected device hardware.

The hardware component 104 may include a processor 108 that may use a random access memory 110 and a non-volatile memory 112. The hardware component 104 may have a network interface 114 and a user interface 116.

In an example of the implementation 100, the hardware component 104 may represent a general-purpose personal computer. In other implementations, the hardware component 104 may be a desktop computer or a server computer. In some implementations, the hardware component 104 may be a portable device like a laptop computer, a notebook computer, even a cellular phone, or a personal digital assistant, or another device.

The software component 106 may include an operating system 118 on which several different types of software may operate.

Executable code 120 may be any type of code that may be executed directly in the operating system. In some cases, the executable code 120 may be machine code that may include commands that may be executed directly by the processor 108. In other cases, the executable code 120 may be assembly code that may be executed after being processed by an assembler program.

Some software components may be defined by using intermediate code 122. The intermediate code 122 may be source code that is compiled into an intermediate representation and may be further compiled by using a just-in-time compiler 124 and executed by an execution engine 126. The intermediate code 122 is useful in a managed (managed) code application or in an application in which several different programming languages may be used.

An application development system 128 may have many of elements used to write, edit, test, debug, and publish an application. In an example of the implementation 100, features of the application development system 128 may be shown as a part of a large application or a programming environment in which a programmer may perform many different operations in a single application. In other implementations, the described components may be separate applications that are executed independently.

In some implementations, parts of the application development system 128 may be executed by other devices. For example, a server device may be configured to compile code into executable code. In another example, another device may be configured to execute the application code and the test code. Such examples may be for a device with a dedicated processor or hardware on which the application code is to be used.

Many implementations of the application development system or the components in the application development system 128 may have a graphical user interface. The graphical user interface may be configured to browse code, write and edit code, and perform selection from many different functions of the components.

In some implementations, some or all of the parts of the application development system 128 may be executed by using a command line or another interface.

Many application development systems 128 may have an editor 130, a compiler 132, and an execution environment 134. The editor 130 may allow a user to view, write, and edit code, including the application code and the test code. The compiler 132 may compile the source code into executable code that can be executed by using the execution environment 134.

The execution environment 134 may be understood as running compiled code in an operating system environment. The execution environment 134 may include some debugging and tracing functions that may provide detail information related to executing code that is not available in the operating system environment.

A group of test components 138 may be configured to develop and test application code 140. The test components 138 may include various components for creating and analyzing test code 142. The test code 142 may be for testing the application code 140 to reveal any defects in the application code 140 and ensure that the application code 140 is executed as expected.

In some implementations, a test code generation module 144 that may create various test code elements from the application code 140 may be included. For example, the test code generation module 144 may create unit tests that may cause commands or functions in the application code to be tested. The unit test may be to test a small part of the application code 140, such as a short function, a subroutine, or an individual command.

In some implementations, the test code generation module 144 may create parts that are of the part of test code and that may be modified or changed by a programmer to comprehensively test the application code. In such implementations, the test code generation module 144 may create a shell of a test like a unit test, and the programmer may edit or write a small part of the test code to complete the test.

The test code 142 may include unit tests that can be for testing an isolated part of the application 140. In a large application, hundreds or even thousands of unit tests may be created to test various parts of the application. The unit test can ensure that small parts of the application code 140 are executed as expected; and can be operated within a single class without a need of external components.

The test code 142 may include an integration test in which software modules or components in the application code 140 may be combined as a group for testing. The integration test may be to test a large subset of the application code 140 in a single test. In many cases, a plurality of integration tests may be created for testing in different use scenarios or test cases. The integration test may include communication between test processes and in other events.

The test code 142 may alternatively include a system test, which may be to test the application code 140 as a single unit. The system test may be to test the application code 140 at a high level in various use scenarios. Many such tests may treat the application code 140 as a "black box", and an input is provided and a specific output is expected. The system test may include a performance test, a function test, an error handling test, a load test, a stress test, a reliability test, a recovery and failover (failover) test, and many other types of tests.

The test code 142 may be tailored to fit a type of the application code 140. One example may be software operating in an avionics computer in an airplane. Such software can operate when human's life is threatened, and the test code 142 may be made very detailed and rigorous. In another example, a simple game application may have specific quality standards to be maintained before shipment, as expected by a game manufacturer. In still another example, for security purposes, a software application that handles health records or other personal information may be tested rigorously. A test code evaluator 146 may analyze the test code 142 by using a test strategy 148 to determine a quality evaluation of the test code 142. The test code evaluator 146 may analyze the test code 142 to look for an assert, a description in the assert, rank complexity, a dependency relationship, and another factor. From these and other analyses, quality test code health metrics may be created for individual tests and for the entire test code 142.

The quality test code health metric may be displayed with each individual test in the test code 142. The health metrics may indicate specific tests that meet criteria defined in the test strategy 148 and specific tests that do not meet criteria defined in the test strategy 148. Tests that do not meet the criteria may be marked for improvement or further development.

The test strategy 148 may define the best practice or test criteria that can be used during the development of the application code 140. The test strategy 148 may define some rules that are applied by the test code evaluator 146 to determine whether the test code 142 conforms to the best practice.

In some implementations, the test strategy 148 may include several groups of rules for each test criterion. These rules may be selected by the programmer, so that the programmer can focus on specific aspects of the test code 142. For example, the programmer may select an assert-related test and may not select another metric. In this case, the test code evaluator 146 may analyze the test code 142 to find a subset of a test that is applicable to the assert, without analyzing other types of potential issues.

A group of test strategies 148 may be created for different types of developed application software and for internal management of a programming team or company. The test strategy 148 may define various characteristics of the test code that the test code evaluator 146 may be configured to verify compliance. In some cases, different types of application code 140 may be for determining the test strategy 148.

An application code evaluator 152 may evaluate the application code 140 in a similar manner to that for the test code 142. A code design strategy 154 may describe an analysis performed by the application code evaluator 152 on the application code 140.

The application code evaluator 152 may examine the application code 140 to determine compliance with the code design strategy 154. The code design strategy 154 may include strategies related to how the application code 140 is constructed, such as a defining modularity strategy, a comment and documentation strategy, checking of input and output parameters of a function, and many other types of analysis.

In some implementations, the test code evaluator 146 and the application code evaluator 152 may be a same application or executable code, but may use the test strategy 148 and the code design strategy 154 to perform different types of checks and analyses on the test code 142 and the application code 140 respectively.

Outputs of the test code evaluator 146 and the application code evaluator 152 may be combined to produce a quality metric for a test result. For example, a completion degree or a coverage degree of a group of test code may be determined by analyzing a function in the application code 140, and the function may be matched with the test code 142 to determine whether all application functions have matched test routines.

In another example, the test result generated by using the test code 142 may be qualified based on the quality of the test code 142. For example, test code with a poor quality test code health metric may adversely affect overall assessment of the application code. In this example, a test result may be generated for poorly constructed test code 142 executed on the application code 140. The test result may be displayed next to the quality test code health metric, and may indicate that the test code 142 does not meet the fundamental criteria defined in the test strategy 148. Such an indication may deny the test result. Conversely, a positive quality test code health metric can provide high confidence in the test result.

A test code executor 150 may execute the test code 142 on the application code 140 to generate a test result. In some implementations, the test code may be executed in a manner of collecting various debugging features of various monitoring information during test execution. The debugging feature may be enabled and disabled in the application development system 128, and may be present or absent when the application is executed outside the application development system 128.

The application development system 128 may include a user interface 136 that may be configured to display the quality test code health metric along with other quality metrics.

Program code 140 shown in FIG. 1 may include to-be-tested code, for example, first code in embodiments of this application. A program in which the first code is located may be a newly developed program or an updated program provided by an engineer or a programmer. Before the program in which the first code is located is integrated into actual practice (for example, deployed in a product or released to the public), the program in which the first code is located may need to be verified to detect whether any defect exists in the program in which the first code is located. The test component 138 may perform a program test on the program in which the first code is located, to verify the program in which the first code is located. For example, the first code may be tested.

In a process of testing the first code, generating test code is an important step. The test code generation module 144 may generate corresponding test code based on information related to to-be-tested code. However, in a process of generating the test code based on a language model, the test code generation module 144 needs to invoke the language model to generate the test code. As shown in FIG. 1, a training sample generation module 161 may construct a training sample of the language model, and a model training module may train (for example, pre-train) the language model based on the training sample obtained by the training sample generation module 161. Further, the test code generation module 144 may generate the test code based on a trained language model.

This application focuses on describing the test code generation module 144 (which may also be referred to as a test code generation module), the training sample generation module 161 (which may also be referred to as a training sample generation module), and the model training module 162 (which may also be referred to as a model training module).

FIG. 1 describes an architecture of an embodiment of this application. The following describes a deployment form of the test code generation module 144 by using an example. In some examples, the test code generation module 144 may be entirely deployed on a cloud (cloud environment), or entirely deployed on an edge (edge environment), or deployed on a terminal. In some other examples, the test code generation module may alternatively be deployed in different environments. For example, the test code generation module may be deployed on a cloud and an edge through edge-cloud synergy. The following describes an example in which the test code generation module is deployed through edge-cloud synergy.

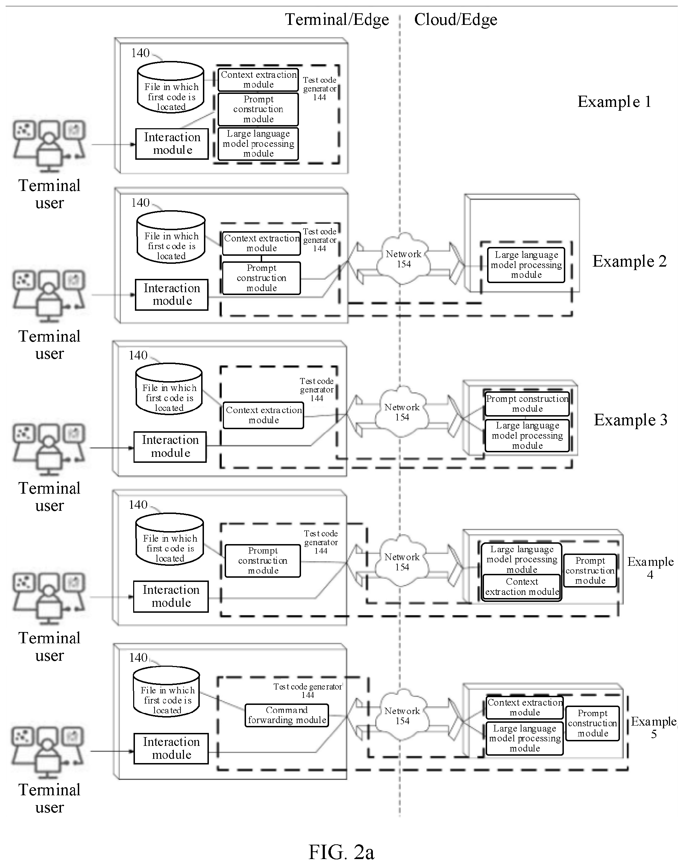

FIG. 2a is a diagram of a deployment form of the test code generation module. As shown in FIG. 2a, the test code generation module may be subdivided into a context extraction module, a prompt construction module, a large language model processing module, a command forwarding module, and the like based on different functions. The test code generation module may be deployed on a hardware device on the cloud and a hardware device on the edge. The hardware device on the cloud usually has rich computational power and a huge storage capability, for example, may include a server and a database. The hardware device on the edge has a specific inference capability and storage capability, for example, may include an industrial computer and an artificial intelligence edge compute device. In some possible implementations, the test code generation module may be alternatively deployed on the terminal, and the terminal may include an internet of things device like a mobile phone, an autonomous driving vehicle, or an industrial quality inspection system.

In Example 1 in FIG. 2a, the test code generation module 144 may be deployed on a terminal side or an edge side. The context extraction module may extract context information of the first code from a file 140 in which the to-be-tested code (the first code) is located. The prompt construction module may construct a prompt based on the context information of the first code as an input of the language model. The large language model processing module may generate the test code by invoking the language model (which may be deployed on the terminal side, the edge side, or a cloud side) based on the prompt obtained by the prompt construction module, and present the test code, for example, present the test code through the user interface 136. An interaction module may be configured to receive a test command (including indication information of the first code) input by a user and visually present the test code. For example, the interaction module may provide an interaction interface for the user. The interaction interface may be a graphical user interface (Graphical User Interface, GUI) or a command user interface (command user interface, CUI). The user may input the test command through the interaction interface like the GUI or the CUI. For example, the interaction interface may display the test code.

In Example 2 in FIG. 2a, the context extraction module and the prompt construction module in the test code generation module 144 may be deployed on a terminal side or an edge side, and the large language model processing module in the test code generation module 144 may be deployed on the edge side or a cloud side. The context extraction module may extract context information of the first code from a file 140 in which the to-be-tested code (the first code) is located. The prompt construction module may construct a prompt based on the context information of the first code as an input of the language model. The constructed prompt may be transferred to the large language model processing module via a network 154. The large language model processing module may generate the test code by invoking the language model (which may be deployed on the terminal side, the edge side, or the cloud side) based on the prompt obtained by the prompt construction module, return the test code to an interaction module on the terminal side or the edge side, and display the test code.

In Example 3 in FIG. 2a, the context extraction module in the test code generation module 144 may be deployed on a terminal side or an edge side, and the prompt construction module and the large language model processing module in the test code generation module 144 may be deployed on the edge side or a cloud side. The context extraction module may extract context information of the first code from a file 140 in which the to-be-tested code (the first code) is located, and the context information of the first code may be transferred to the prompt construction module via a network 154. The prompt construction module may construct a prompt based on the context information of the first code as an input of the language model. The large language model processing module may generate the test code by invoking the language model (which may be deployed on the terminal side, the edge side, or the cloud side) based on the prompt obtained by the prompt construction module, return the test code to an interaction module on the terminal side or the edge side, and display the test code.

In Example 4 in FIG. 2a, a prompt construction module in the test code generation module 144 may be deployed on a terminal side or an edge side. A prompt obtained by the prompt construction module may indicate to extract context information of the first code. A prompt construction module (which is different from the prompt construction module located on the terminal side) and the large language model processing module in the test code generation module 144 may be deployed on the edge side or a cloud side. The large language model processing module may extract the context information of the first code based on the prompt from a file 140 in which the to-be-tested code (the first code) is located (which is equivalent to implementing a function of the context extraction module). Further, the prompt construction module may construct the prompt based on the context information of the first code as an input of the language model. The large language model processing module may generate the test code by invoking the language model (which may be deployed on the terminal side, the edge side, or the cloud side) based on the prompt obtained by the prompt construction module, return the test code to an interaction module on the terminal side or the edge side, and display the test code.

In Example 5 in FIG. 2a, the command forwarding module in the test code generation module 144 may be deployed on a terminal side or an edge side, and the context extraction module, the prompt construction module, and the large language model processing module in the test code generation module 144 may be deployed on the edge side or a cloud side. The command forwarding module may transfer a test command to the context extraction module via a network 154. The context extraction module may extract context information of the first code from a file 140 in which the to-be-tested code (the first code) is located. The prompt construction module may construct a prompt based on the context information of the first code as an input of the language model. The large language model processing module may generate the test code by invoking the language model (which may be deployed on the terminal side, the edge side, or the cloud side) based on the prompt obtained by the prompt construction module, return the test code to an interaction module on the terminal side or the edge side, and display the test code.

It should be noted that FIG. 2a is merely an example of the deployment form of the test code generation module. In another possible implementation of this application, the test code generation module may alternatively be deployed in another manner. This is not limited in this application.

The following describes a deployment form of the training sample generation module 161 by using an example. In some examples, the training sample generation module 161 may be entirely deployed on a cloud (cloud environment), or entirely deployed on an edge (edge environment), or deployed on a terminal. In some other examples, the training sample generation module 161 may alternatively be deployed in different environments. For example, the training sample generation module may be deployed on a cloud and an edge through edge-cloud synergy. The following describes an example in which the training sample generation module 161 is deployed on a cloud side.

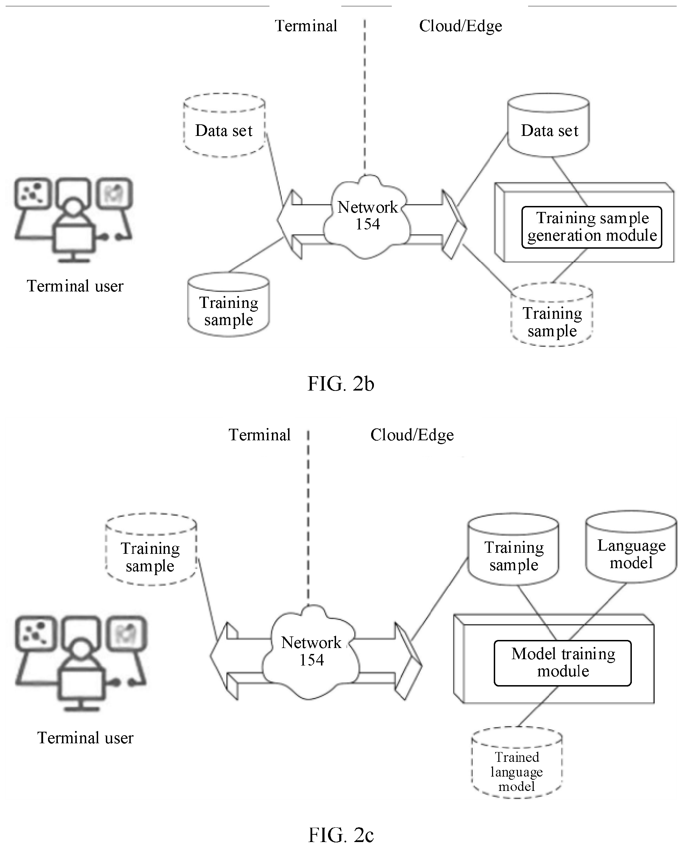

FIG. 2b is a diagram of the deployment form of the training sample generation module. As shown in FIG. 2b, the training sample generation module may be deployed on a hardware device on the cloud and a hardware device on the edge. The hardware device on the cloud usually has rich computational power and a huge storage capability, for example, may include a server and a database. The hardware device on the edge has a specific inference capability and storage capability, for example, may include an industrial computer and an artificial intelligence edge compute device.

In the example in FIG. 2b, the training sample generation module 161 may be deployed on the cloud side. A terminal side may transfer a code set to the test code generation module 144 via a network 154. The test code generation module 144 may extract, from the code set, a training sample that can be used for the language model. The training sample may include the to-be-tested code and a truth value of the corresponding test code. In addition, the test code generation module 144 may further obtain context information of the to-be-tested code and context information of the test code from the code set to enhance the training sample. In addition, other post-processing may be performed on the training sample to improve quality of the training sample. The test code generation module 144 may transfer the obtained training sample to the terminal side via the network 154, or directly perform language model training on the cloud side.

The following describes a deployment form of the training training module 162 by using an example. In some examples, the training training module 162 may be entirely deployed on a cloud (cloud environment), or entirely deployed on an edge (edge environment), or deployed on a terminal. In some other examples, the training training module 162 may alternatively be deployed in different environments. For example, the training training module may be deployed on a cloud and an edge through edge-cloud synergy. The following describes an example in which the training training module 162 is deployed on a cloud side.

FIG. 2c is a diagram of the deployment form of the training training module. As shown in FIG. 2c, the training training module may be deployed on a hardware device on the cloud and a hardware device on the edge. The hardware device on the cloud usually has rich computational power and a huge storage capability, for example, may include a server and a database. The hardware device on the edge has a specific inference capability and storage capability, for example, may include an industrial computer and an artificial intelligence edge compute device.

In the example in FIG. 2c, the training training module 162 may be deployed on the cloud side. A terminal side may transfer a training sample to the test code generation module 144 via a network 154. The test code generation module 144 may train the language model based on the training sample, to obtain a trained language model.

In terms of a product form, a test code test module may serve the user in a form of a plug-in. In a developer test phase, a software developer may select a service project to be tested from a code editor, and a plug-in of the code editor automatically generates test code including semi-structured data. Specifically, a working procedure of the plug-in of the code editor includes the following phases in sequence: a front-end interaction phase, a program analysis phase, a data pre-processing phase, a test code generation phase, a test code post-processing phase, a result returning phase, and a user feedback phase.

In terms of a product form, a test code test module, the training sample generation module, and the model training module may provide a call service in a form of a cloud service capability and in a form of an API structure, and provide the service for another test tool, to automatically generate unit test code, execute the unit test code, and output a test result.

In terms of a product form, the test code test module may execute, in a manner of command line execution, a corresponding command in a command line, to automatically analyze service code, extract context information, and automatically invoke a test code generation model, to obtain executable unit test code code and automatically execute the code to obtain a test output.

Based on the test code generation module shown in FIG. 1 and FIG. 2a, this application further provides a code testing method. The following describes the code testing method in this application.

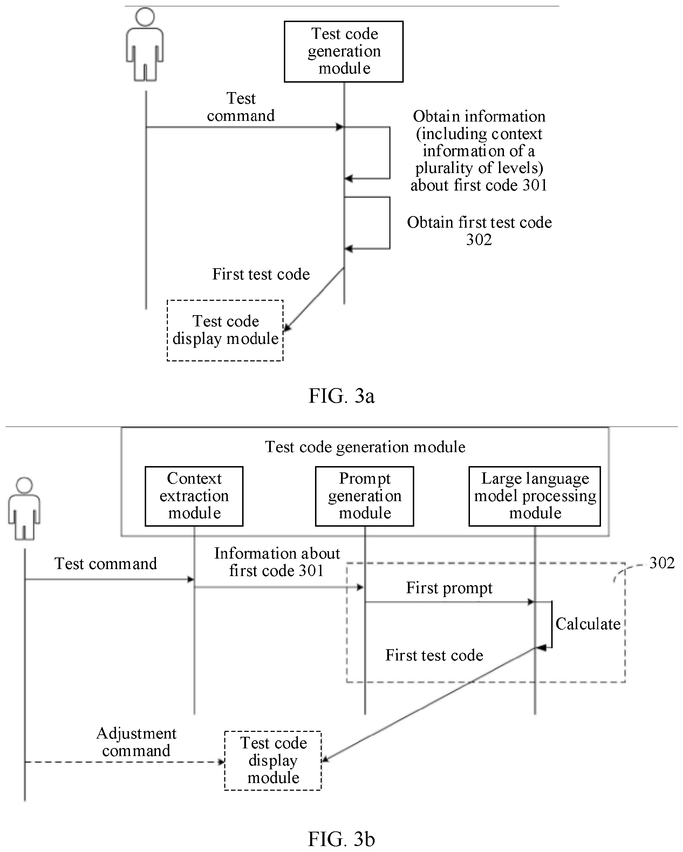

Refer to a flowchart of a code testing method shown in FIG. 3a. The method may be performed by the test code generation module. The method includes the following steps.

301: Receive a test command for first code, where the first code is code in a to-be-edited program, and the test command indicates to generate test code by using a language model; and obtain information about the first code from a file associated with the first code, where the information about the first code includes context information of a function included in the first code and one or more of the following information: context information of the file associated with the first code, context information of a project in which the first code is located, or context information of a test framework used for the first code.

In a possible implementation, an interaction module may receive the test command for the first code. In this case, a context extraction module in the test code generation module may obtain context information of the first code.

In a possible implementation, when the test command for the first code on a code editing interface is received, the information about the first code may be obtained.

In a possible implementation, the test command may indicate to generate the test code by using the language model. In a possible implementation, the context information of the first code may be obtained from the file in which the first code is located.

In a possible implementation, the first code is function-level code, class-level code, or file-level code. In other words, a unit test may be performed on the first code.

The following describes the context information of the first code.

The context information of the first code may be context information of a plurality of levels. The plurality of levels may include but are not limited to: a function level, a file level, a function level, and a framework level.

In a possible implementation, the context information of the function included in the first code includes at least one of a type to which an input parameter of the included function belongs, a return value type of the function, and a method call in a function body.

In a possible implementation, the context information of the file associated with the first code includes at least one of a variable name, structure information, an object name, an object definition, a member variable of a class, a member function of the class, a construction method of the class, and an inheritance relationship of the class of the file associated with the first code.

In a possible implementation, the context information of the project in which the first code is located includes statistics information or a type of a programming language of the project in which the first code is located.

In a possible implementation, the context information of the test framework used for the first code includes a type of the test framework used for the first code or a type of a mock framework.

302: Obtain, based on the information about the first code, first test code corresponding to the first code, where the information about the first code is used to construct a prompt prompt used as an input of the language model, and the first test code is obtained based on the prompt prompt by using the language model.

In a possible implementation, the context information of the first code may be sent to a compute device on a cloud side, and the first test code that corresponds to the first code and that is obtained by the compute device on the cloud side based on the context information of the first code is received. The compute device on the cloud side may obtain, based on the information about the first code by using the language model, the first test code corresponding to the first code.

In a possible implementation, the first test code corresponding to the first code may be obtained based on the information about the first code by using the language model.

In a possible implementation, refer to FIG. 3b. A first prompt prompt including the information about the first code may be obtained. For example, a prompt generation module in the test code generation module may construct the first prompt based on the context information of the first code. The first prompt indicates the language model to generate test code of the first code based on the information about the first code. Further, a large language model processing module may obtain, based on the first prompt, the first test code corresponding to the first code.

In a possible implementation, the first prompt may be sent to the compute device on the cloud side. The compute device on the cloud side may obtain, based on the first prompt by using the language model, the first test code corresponding to the first code, and a terminal side may receive the first test code that corresponds to the first code and that is obtained by the compute device on the cloud side.

In a possible implementation, the terminal side obtains, based on the first prompt by using the language model, the first test code corresponding to the first code.

In this embodiment of this application, the large language model may have a multi-code language processing capability, that is, a multi-code language test code generation capability, that is, generate corresponding test code for to-be-tested code of a plurality of different code language types. For example, information about second code may be obtained, where the second code and the first code are of programming languages of different types; and second test code is obtained based on a second prompt, where the first test code and the first code are of programming languages of a same type, and the second test code and the second code are of programming languages of a same type.

In a possible implementation, test samples of different code languages may be constructed during training, so that a trained language model has a multi-code language processing capability, that is, a multi-code language test code generation capability.

In this embodiment of this application, the method in the embodiment corresponding to FIG. 3a may alternatively be a feedforward process of a training process of the language model. In a reverse update process, the language model may be updated based on the first test code and third test code corresponding to the first code, where the third test code is used as a truth value of the test code of the first code. For example, a prompt including the first test code and the third test code corresponding to the first code may be constructed to guide the language model to be updated.

Based on the test code generation module shown in FIG. 1 and Example 4 in FIG. 2a, this application further provides a code testing method. The following describes the code testing method in this application.

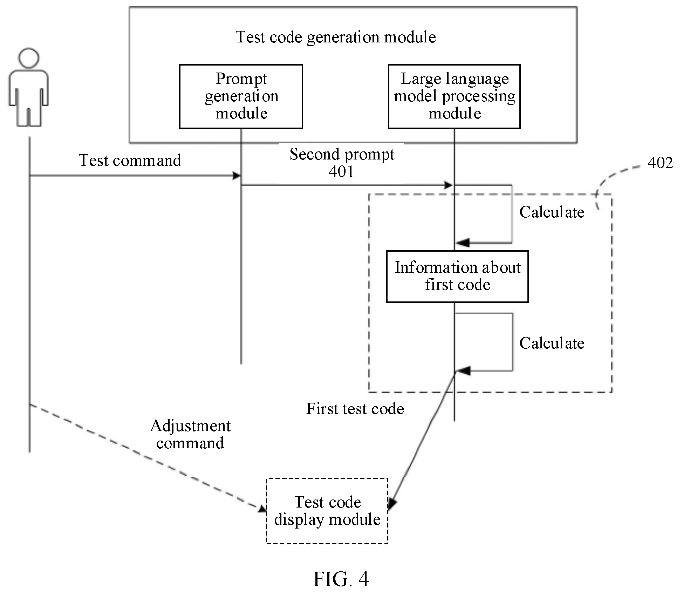

Refer to a flowchart of a code testing method shown in FIG. 4. The method may be performed by the test code generation module. The method includes the following steps.

401: Receive a test command for first code, where the first code is code in a to-be-edited program, and the test command indicates to generate test code by using a language model; and obtain a second prompt, where the second prompt indicates the language model to extract information about the first code from a file of the first code, and generate test code of the first code based on the information about the first code; and the information about the first code includes context information of a function included in the first code and one or more of the following information: context information of a file associated with the first code, the context information of the file associated with the first code, context information of a project in which the first code is located, or context information of a test framework used for the first code.

Different from the embodiment corresponding to FIG. 3a, the language model may be guided, based on the prompt, to extract the context information.

In a possible implementation, the context information of the function included in the first code includes at least one of a type to which an input parameter of the included function belongs, a return value type of the function, and a method call in a function body; the context information of the file associated with the first code includes at least one of a variable name, structure information, an object name, an object definition, a member variable of a class, a member function of the class, a construction method of the class, and an inheritance relationship of the class of the file associated with the first code; the context information of the project in which the first code is located includes statistics information or a type of a programming language of the project in which the first code is located; or the context information of the test framework used for the first code includes a type of the test framework used for the first code or a type of a mock framework.

402: Obtain, based on the second prompt, first test code corresponding to the first code.

In a possible implementation, the second prompt may be sent to a compute device on a cloud side. The compute device on the cloud side may obtain, based on the second prompt by using the language model, the first test code corresponding to the first code, and return the first test code to a terminal side. In this way, the terminal side may receive the first test code that corresponds to the first code and that is obtained based on the second prompt.

In a possible implementation, the first test code corresponding to the first code may be obtained based on the second prompt by using the language model.

In this embodiment of this application, the method in the embodiment corresponding to FIG. 4 may alternatively be a feedforward process of a training process of the language model. In a reverse update process, the language model may be updated based on the first test code and third test code corresponding to the first code, where the third test code is used as a truth value of the test code of the first code. For example, a prompt including the first test code and the third test code corresponding to the first code may be constructed to guide the language model to be updated.

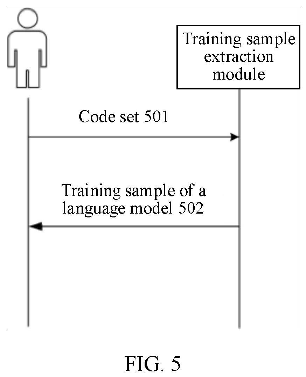

Based on the training sample generation module shown in FIG. 1 and FIG. 2a, this application further provides a training sample generation method. The following describes the training sample generation method in this application. Refer to a flowchart of a training sample generation method shown in FIG. 5. The method may be performed by the training sample generation module. The method includes the following steps.

501: Obtain a code set.

For example, the code set may be a code file, and in this embodiment of this application, a training sample of a language model may be extracted from the code set.

502: Obtain the training sample of the language model based on the code set, where the training sample includes first code and third test code that are extracted from the code set, the code set is adapted to a first test framework, the first test framework indicates a constraint of a test function that can be used as a to-be-tested function, the constraint includes a constraint of the test function and a constraint of a call relationship between the test function and the to-be-tested function, the third test code meets the constraint of the test function, and a call relationship between the third test code and the first code meets the constraint of the call relationship, where the third test code is used as a truth value of the test code of the first code.

The training sample extracted from the code set may include to-be-tested code (for example, the first code) and a truth value (for example, the third test code) of the test code corresponding to the first code. To extract a high-quality training sample, in this embodiment of this application, based on a preset test framework, code that meets a constraint specified by the test framework is extracted from the code set as the training sample.

The test framework indicates a constraint of a test function that can be used as a to-be-tested function, and the constraint includes a constraint of the test function and a constraint of a call relationship between the test function and the to-be-tested function.

Due to different code language types, or even different code writing manners of a same language, different code sets may be adapted to different test frameworks. The "test framework adapted to the code set" herein may be understood as a constraint that needs to be met by a pair of the to-be-tested function and the test function in a language and a writing manner of the code set.

After the code set is obtained in step 501, a test framework (that is, the first test framework in this embodiment of this application) that is adapted to the code set may be determined from a plurality of preset test frameworks. A test framework feature library may be constructed based on the plurality of preset test frameworks offline. By constructing the test framework feature library offline, a data collection range is expanded, and diversity of training data can be increased. In addition, generalization and extensibility are enhanced, and the preset test frameworks can be widely applied to various test model training and inference in a plurality of languages (for example, Java, Python, Go, Cxx, JS, and Ts). During training sample extraction, automatic analysis can be performed without manual definition of templates and constraints, which reduces test costs and is more practical and universal.

The following describes the test framework and how to extract the training sample based on the test framework.

In a possible implementation, the test framework may include a constraint of the test code and a constraint of a call relationship between the to-be-tested code and the test code.

Optionally, the constraint of the test code may be that a function type needs to be a type of the test function. For example, whether a function is a test function may be determined based on a test macro name.

Optionally, the constraint of the test code may be a constraint of a name of a function test suite, for example, whether the test suite is unique, which may be determined, for example, depending on whether a 1^{st} parameter in a text () is unique.

Optionally, the constraint of the call relationship may include at least one of the following: A direct call relationship exists, a multi-level call relationship exists, or an anonymous call relationship exists.

In a possible implementation, the third test code that meets the constraint of the test function may be obtained from the code set. When the first code is called for the third test code in the code set, and the call relationship meets the constraint of the call relationship, the third test code is used as the truth value of the test code of the first code.

In a possible implementation, the code set includes a plurality of pieces of code that are called for the third test code and whose call relationship meets the constraint of the call relationship; and the first code is code that is in the plurality of pieces of code and that has a highest similarity to the third test code.

In a possible implementation, the third test code that meets the constraint of the test function may be obtained from the code set, where the third test code includes an assert; a target variable included in the assert is determined; and when a value is assigned to the target variable by calling the first code, and the call relationship between the first code and the third test code meets the constraint of the call relationship, the third test code is used as the truth value of the test code of the first code.

An assert (assert) refers to some Boolean expressions, which are used to debug a program and determine whether some tested functions work normally (that is, compare whether an actual value is the same as an expected value). The assert is to determine an execution structure, but not to determine a service procedure. The assert is the most basic component of a unit test. The assert is equivalent to an if () statement. If the assert is met, the program is executed. If the assert is not met, an error is thrown. Each type of assert has two forms. One includes receiving a message parameter, for example, "static public void assertTrue(Stringmessage,boolean condition)", where message indicates prompt information when an error occurs. The other form does not include a message parameter. For example, if a programmer believes that a value of the expression is true at a specific point in the program, the programmer can enable or disable assert verification at any time. The assert is enabled during testing and disabled during deployment. After the program is put into running, a user can enable the assert again when the user encounters problems. The assert is used to help create more stable and high-quality code that is not prone to errors. If a current operation needs to be interrupted when the value is FALSE, the assert is used. The assert (Junit/JunitX) is necessary for the unit test.

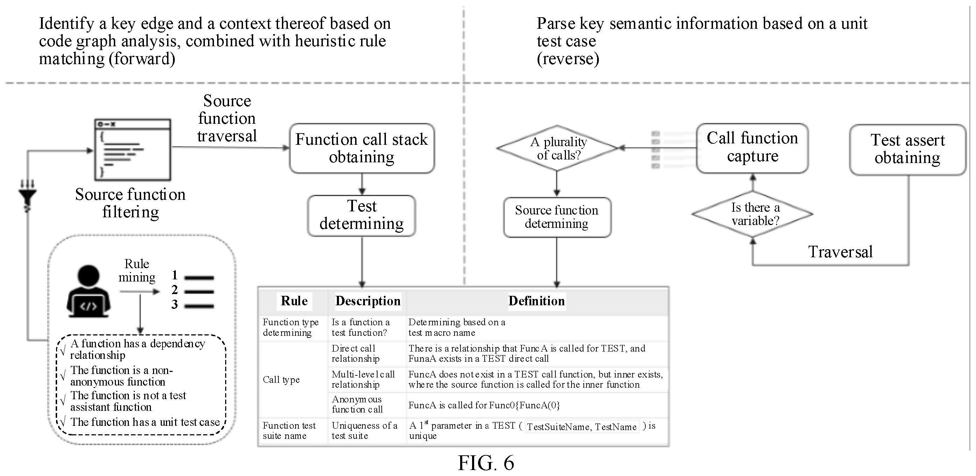

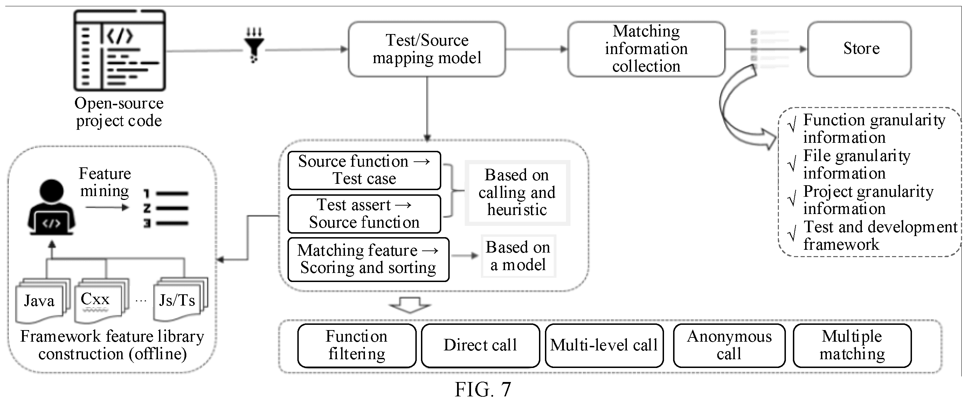

For example, FIG. 7 is a diagram of a training sample construction procedure. A feature rule corresponding to a framework may be queried for, and matching may be performed based on a call chain and the rule. However, due to diversity of code, various cases may be encountered in a matching process, for example, multiple matching (to be specific, one test function includes calls to a plurality of functions), which cannot be resolved only by using a heuristic method. Therefore, for this case, a method based on a matching feature + scoring and sorting is added. A heuristic rule matching algorithm in a test-source mapping model combines forward matching from a source function to a test function and reverse matching from the test function to the source function. As shown in FIG. 6, in the forward matching, source function filtering is first performed according to a general rule, and a function including test code is retained. Then, a function call stack is obtained, and test code determining and matching are performed based on a call type. In the reverse matching, filtering is first performed on test asserts and a call relationship is captured. For a one-to-many call, determining is also performed according to a rule of call relationship classification, and a source function that meets the condition is selected.

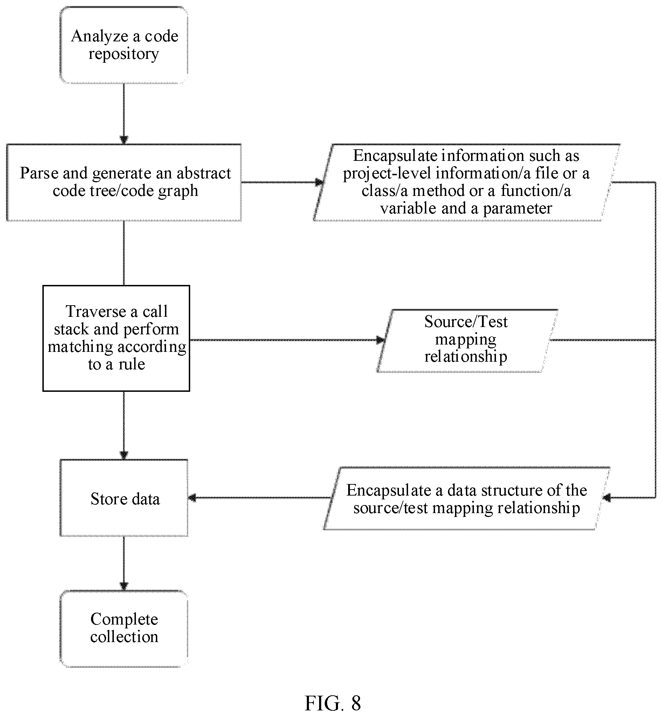

FIG. 8 is a diagram of a training sample construction procedure. Language-agnostic general project-level parsing may be first performed, and construction is performed by constructing an abstract syntax tree or a code graph, and then a call chain inside project code is further obtained. A filtering rule of a source function including test code is defined, and all source functions and test functions that meet the rule are captured. A mapping between the source function and the test function is obtained based on an association relationship such as a call relationship and a naming manner. A matching manner that combines forward and reverse matching according to a heuristic rule is used. In the forward matching, a function call stack relationship is used as a main rule, and a path matching rule and a file type rule are used as assistants to match the function with the test code. In the reverse matching, a function return value is extracted from an assert of the test code, and then a to-be-tested source function corresponding to the function return value is extracted from a function body of the test code. In addition, a priority calculation method and a sorting mechanism based on multi-factor weighting are introduced. C/C++ collection is used as an example. Because of characteristics of a collection GTest framework, test code of functions in a same source file has a same test suite name. A unit test code function and the source function are converted into vectors in a model manner, and then the source function vectors are sorted. A highest sorted source function after sorting is the to-be-tested function. A sorting strategy is to sort possibilities of tested functions of unit test code. After the unit test code function and the source function are converted into vectors, a similarity between the unit test code function and the source function is directly calculated. A function with the highest similarity is the to-be-tested function. After assigned values are traversed, language-agnostic general information, that is, multi-level definition results such as a function, a file, a project, and an adaptation framework, is stored in a database for training of a large model.

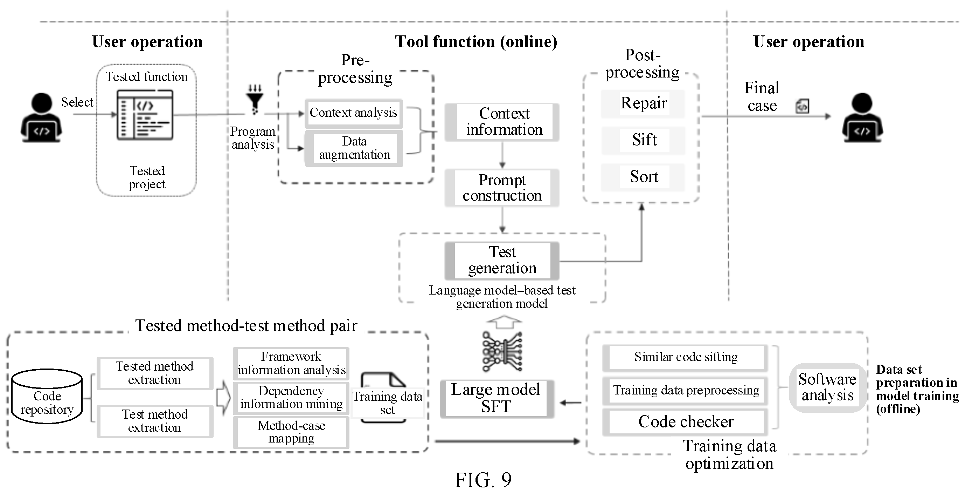

FIG. 9 is a diagram of an overall procedure of constructing a training sample, model training, and inference. The procedure may include: by using a software analysis-based candidate code pre-processing module, after a user selects a to-be-tested function, enter a pre-processing part: perform dynamic context analysis and data augmentation on current code, to construct rich prompt information, where a pre-processing method for data augmentation includes: extracting context information of a test class in a tested function, so that a large model can identify and use information such as a variable name in a context, to avoid a problem of an incorrect variable name; extracting a test framework and a mock framework that are required for generating test code; extracting information such as member variables and member functions of a parameter class and a return class in the tested function; performing program branch analysis and use; and adding test code corresponding to a similar source function as a reference; then, enter a training data optimization module: sift, statically check, and perform field preprocessing on training data based on a software analysis technology, to obtain a final code set, where a specific data sifting rule includes: (1) sift out data that has a lines of code count within a closed interval [4, 100] in a to-be-tested method; (2) a proportion of English letters in all characters of the to-be-tested method is not lower than a given threshold, for example, 25%; and (3) a proportion of numeric characters in all the characters of the to-be-tested method is not higher than a given threshold, for example, 90%; then, enter a large model-based unit test code generation module: for candidate code selected by the user, construct a prompt based on information obtained through pre-processing, and input the prompt into a test generation model; and generate test code code by using the large model, where an obtained test code generation result enters a post-processing module for a round of sorting and sifting, to obtain a final test code code.

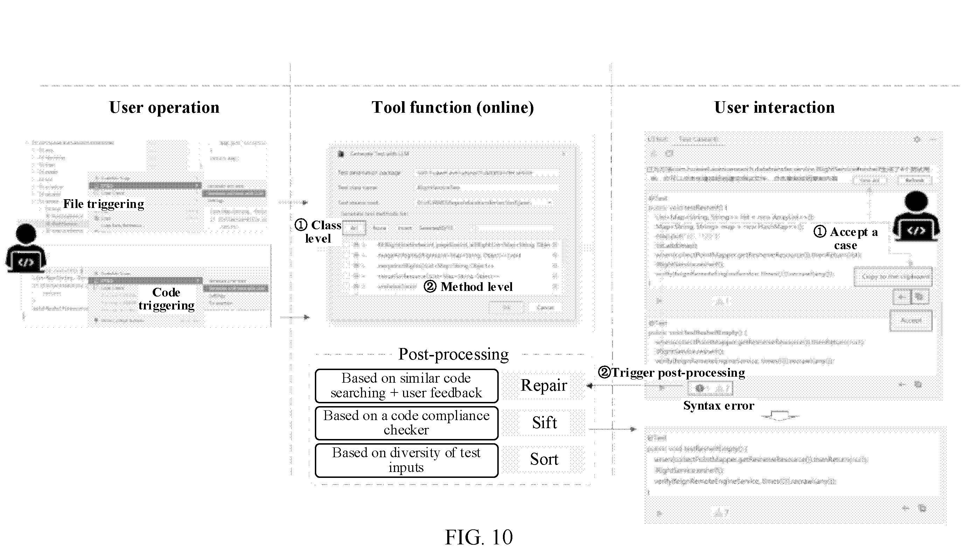

FIG. 10 is a diagram of a front-end interface when a test code generation module is used as an extended function or a plug-in of a code editor or an IDE.

In specific implementation, generation of test code and sifting of test assistant generation results are completed by interacting with a user and a test generation plug-in. Timing of human-machine interaction may include: (1) actively triggering project-level context analysis and test code generation by selecting code content in a tested method and then using a right-click menu or shortcut key; and (2) triggering project-level context analysis and test code generation in a question-answering dialog.

After the triggering, a setting option may be further modified, including confirming a tested class and the tested method. After a user confirms setting information, test code generation is triggered. A front end constructs information parsed from tested code into a prompt and sends the prompt to a back end as a request. The back end sends the prompt to the large model for inference, and then returns, to the front end, a plurality of candidate results returned by the large model. After the test code is generated, the test code is automatically opened and displayed in parallel with a current code editor. A test generation result is displayed to a user in a form of a plurality of code snippets in a sidebar.

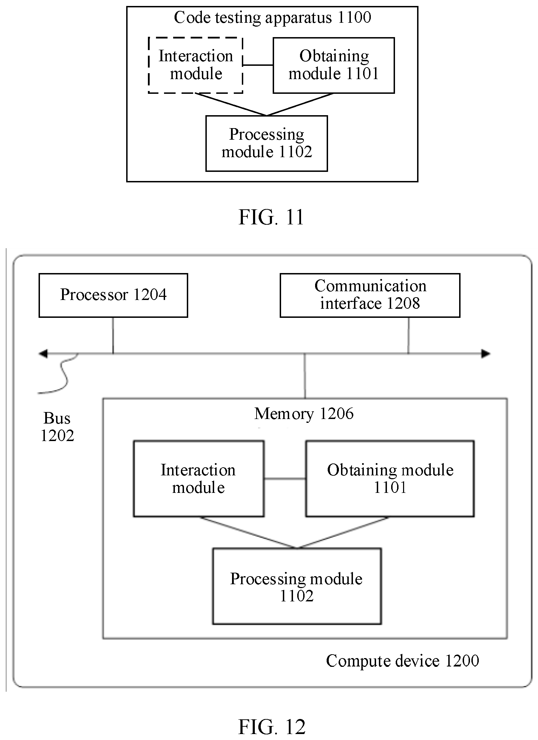

From a perspective of a model, the human-machine interaction is performed in a form of the prompt. From a perspective of the user, after a case generation result is displayed, the user can directly accept the case, that is, copy the case to an existing test file or create a test file and import the case. In addition, the user can click and select, depending on whether an expectation is met, a post-processing module to fix a generated test code snippet, and then determine whether to adopt the case. There may be a plurality of possible implementation forms for plug-in interaction. Based on the foregoing code testing method, this application further provides a code testing apparatus. As shown in FIG. 11, the code testing apparatus 1100 includes:
an interaction module, configured to receive a test command input by a user;
an obtaining module 1101 (for example, may include the context extraction module, the prompt generation module, and the like described in the foregoing embodiment), configured to obtain information about first code, where the information about the first code includes one or more of the following information: context information of a function included in the first code, context information of a file associated with the first code, the context information of the file associated with the first code, context information of a project in which the first code is located, or context information of a test framework used for the first code; and
a processing module 1102 (for example, may include the prompt generation module, the large language model processing module, and the like described in the foregoing embodiment), configured to obtain, based on the information about the first code, first test code corresponding to the first code.

For example, the obtaining module 1101 and the processing module 1102 may be implemented by hardware, or may be implemented by software.

When the interaction module, the obtaining module 1101, and the processing module 1102 are implemented by using software, the interaction module, the obtaining module 1101, and the processing module 1102 are application programs running on a compute device (for example, a server). For example, the processing module 1102 may be a computing engine and the like running on the compute device. The application program may be provided as a virtualization service for a user to use. The virtualization service may include a virtual machine (virtual machine, VM) service, a bare metal server (bare metal server, BMS) service, and a container (container) service. The VM service may be a service of virtualizing a virtual machine (virtual machine, VM) resource pool on a plurality of physical hosts (for example, compute devices) by using a virtualization technology, to provide a VM on demand for the user to use. The BMS service is a service of virtualizing a BMS resource pool on a plurality of physical hosts to provide a BMS on demand for the user to use. The container service is a service of virtualizing a container resource pool on a plurality of physical hosts to provide a container on demand for the user to use. The VM is a simulated virtual computer, namely, a logical computer. The BMS is an elastically scalable high-performance computing service whose computing performance is the same as that of a conventional physical machine, and has a feature of secure physical isolation. The container is a kernel virtualization technology capable of providing lightweight virtualization to isolate user spaces, processes, and resources. It should be understood that the VM service, the BMS service, and the container service in the virtualization service are merely specific examples. During actual practice, the virtualization service may alternatively be another lightweight or heavyweight virtualization service. This is not specifically limited herein. When the interaction module and the obtaining module 1101 are implemented by using hardware, the interaction module and the obtaining module 1101 may be implemented by using a transceiver module like a transceiver. The processing module 1102 may include at least one compute device, for example, a server. Alternatively, the processing module 1102 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

For specific descriptions of the obtaining module 1101, refer to the specific descriptions of step 301, step 401, and step 501 in the foregoing embodiments. Similarities are not described herein again.

For specific descriptions of the processing module 1102, refer to the specific descriptions of step 302, step 402, and step 502 in the foregoing embodiments. Similarities are not described herein again.

This application further provides a compute device 1200. As shown in FIG. 12, the compute device 1200 includes a bus 1202, a processor 1204, a memory 1206, and a communication interface 1208. The processor 1204, the memory 1206, and the communication interface 1208 communicate with each other through the bus 1202. The compute device 1200 may be a server or a terminal device. It should be understood that quantities of processors and memories in the compute device 1200 are not limited in this application.

The bus 1202 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 12. However, this does not indicate that there is only one bus or only one type of bus. The bus 1202 may include a path for transmitting information between components (for example, the memory 1206, the processor 1204, and the communication interface 1208) of the compute device 1200.

The processor 1204 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1206 may include a volatile memory (volatile memory), for example, a random access memory (random access memory, RAM). The memory 1206 may further include a non-volatile memory (non-volatile memory), for example, a read-only memory (read-only memory, ROM), a flash memory, a hard disk drive (hard disk drive, HDD), or a solid-state drive (solid-state drive, SSD). The memory 1206 stores executable program code, and the processor 1204 executes the executable program code to implement the foregoing code testing method. Specifically, the memory 1206 stores instructions that are used by a test code generation module to perform the code testing method.

The communication interface 1208 uses a transceiver module, for example, but not limited to, a network interface card or a transceiver, to implement communication between the compute device 1200 and another device or a communication network.

An embodiment of this application further provides a compute device cluster. The compute device cluster includes at least one compute device. The compute device may be a server, for example, a central server, an edge server, or a local server in a local data center. In some embodiments, the compute device may alternatively be a terminal device, for example, a desktop computer, a notebook computer, or a smartphone.

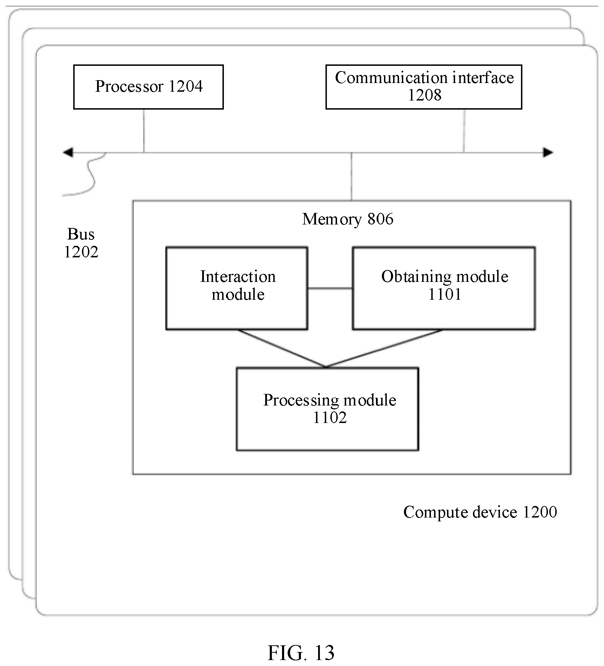

As shown in FIG. 13, the compute device cluster includes at least one compute device 1200. Memories 1206 of one or more compute devices 1200 in the compute device cluster may store same instructions that are used by the test code generation module to perform the code testing method.

In some possible implementations, the one or more compute devices 1200 in the compute device cluster may also be configured to execute a part of instructions that are used by the test code generation module to perform the code testing method. In other words, a combination of the one or more compute devices 1200 may jointly execute the instructions that are used by the test code generation module to perform the code testing method.

It should be noted that memories 1206 in different compute devices 1200 in the compute device cluster may store different instructions, and the different instructions are used to perform a part of functions of the test code generation module.

An embodiment of this application further provide a computer-readable storage medium. The computer-readable storage medium may be any usable medium accessible by a compute device, or a data storage device, like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions that instruct the compute device to perform the code testing method, the training sample generation method, and the model training method that are applied to the test code generation module.

An embodiment of this application further provides a computer program product including instructions. The computer program product may be software or a program product that includes the instructions and that can run on a compute device or can be stored in any usable medium. When the computer program product runs on at least one compute device, the at least one compute device is enabled to perform the code testing method, the training sample generation method, and the model training method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, and such modifications or replacements do not make the essence of the corresponding technical solutions depart from the protection scope of the technical solutions of embodiments of the present invention.

## Claims

1. A code testing method, wherein the method comprises:
receiving a test command for first code, wherein the first code is code in a to-be-edited program, and the test command indicates to generate test code by using a language model;
obtaining information about the first code from a file associated with the first code, wherein the information about the first code comprises context information of a function comprised in the first code and one or more of the following information: context information of the file associated with the first code, context information of a project in which the first code is located, or context information of a test framework used for the first code;
obtaining, based on the information about the first code, first test code corresponding to the first code, wherein the information about the first code is used to construct a prompt (prompt) used as an input of the language model, and the first test code is obtained based on the prompt (prompt) by using the language model; and
testing the first code based on the first test code.

2. The method according to claim 1, wherein
the context information of the function comprised in the first code comprises at least one of a type to which an input parameter of the comprised function belongs, a return value type of the function, and a method call in a function body;
the context information of the file associated with the first code comprises at least one of a variable name, structure information, an object name, an object definition, a member variable of a class, a member function of the class, a construction method of the class, and an inheritance relationship of the class of the file associated with the first code;
the context information of the project in which the first code is located comprises statistics information or a type of a programming language of the project in which the first code is located; or
the context information of the test framework used for the first code comprises a type of the test framework used for the first code or a type of a mock framework.

3. The method according to claim 1 or 2, wherein the obtaining, based on the information about the first code, the first test code corresponding to the first code comprises:
sending the information about the first code, and receiving the first test code that corresponds to the first code and that is obtained based on the information about the first code; or
obtaining, based on the information about the first code by using the language model, the first test code corresponding to the first code.

4. The method according to any one of claims 1 to 3, wherein the obtaining the information about the first code comprises: obtaining a first prompt (prompt) comprising the information about the first code, wherein the first prompt indicates the language model to generate test code of the first code based on the information about the first code; and
the obtaining, based on the information about the first code, the first test code corresponding to the first code comprises:
sending the first prompt, and receiving the first test code that corresponds to the first code and that is obtained based on the first prompt; or
obtaining, based on the first prompt by using the language model, the first test code corresponding to the first code.

5. The method according to any one of claims 1 to 4, wherein the first code is function-level code, class-level code, or file-level code.

6. The method according to any one of claims 1 to 5, wherein the method further comprises:
receiving the test command for the first code on a code editing interface, wherein the test command indicates to generate the test code for the first code based on the language model.

7. The method according to any one of claims 1 to 6, wherein the first test code is obtained based on the information about the first code by using the language model, and the method further comprises:
obtaining information about second code, wherein the second code and the first code are of programming languages of different types; and
obtaining second test code based on the information about the second code by using the language model, wherein the first test code and the first code are of programming languages of a same type, and the second test code and the second code are of programming languages of a same type.

8. The method according to any one of claims 1 to 7, wherein the method further comprises:
updating the language model based on the first test code and third test code corresponding to the first code, wherein the third test code is used as a truth value of the test code of the first code.

9. The method according to claim 8, wherein the method further comprises:
obtaining a code set; and
obtaining a training sample of the language model based on the code set, wherein the training sample comprises the first code and the third test code that are extracted from the code set, the code set is adapted to a first test framework, the first test framework indicates a constraint of a test function that can be used as a to-be-tested function, the constraint comprises a constraint of the test function and a constraint of a call relationship between the test function and the to-be-tested function, the third test code meets the constraint of the test function, and a call relationship between the third test code and the first code meets the constraint of the call relationship.

10. The method according to claim 9, wherein the obtaining the training sample of the language model based on the code set comprises:
obtaining, from the code set, the third test code that meets the constraint of the test function; and
when the first code is called for the third test code in the code set, and the call relationship meets the constraint of the call relationship, using the third test code as the truth value of the test code of the first code.

11. The method according to claim 9, wherein the obtaining the training sample of the language model based on the code set comprises:
obtaining, from the code set, the third test code that meets the constraint of the test function, wherein the third test code comprises an assert;
determining a target variable comprised in the assert; and
when a value is assigned to the target variable by calling the first code, and the call relationship between the first code and the third test code meets the constraint of the call relationship, using the third test code as the truth value of the test code of the first code.

12. A code testing method, wherein the method comprises:
receiving a test command for first code, wherein the first code is code in a to-be-edited program, and the test command indicates to generate test code by using a language model;
obtaining a second prompt, wherein the second prompt indicates the language model to extract information about the first code based on a file of the first code, and generate test code of the first code based on the information about the first code; and the information about the first code comprises context information of a function comprised in the first code and one or more of the following information: context information of a file associated with the first code, the context information of the file associated with the first code, context information of a project in which the first code is located, or context information of a test framework used for the first code;
obtaining, based on the second prompt, first test code corresponding to the first code; and
testing the first code based on the first test code.

13. A code testing apparatus, wherein the apparatus comprises:
an obtaining module, configured to receive a test command for first code, wherein the first code is code in a to-be-edited program, and the test command indicates to generate test code by using a language model; and obtain information about the first code from a file associated with the first code, wherein the information about the first code comprises context information of a function comprised in the first code and one or more of the following information: context information of the file associated with the first code, context information of a project in which the first code is located, or context information of a test framework used for the first code, wherein the information about the first code is used to construct a prompt prompt that is used as an input of the language model, and the first test code is obtained based on the prompt prompt by using the language model; and
a processing module, configured to obtain, based on the information about the first code, the first test code corresponding to the first code; and test the first code based on the first test code.

14. The apparatus according to claim 13, wherein
the context information of the function comprised in the first code comprises at least one of a type to which an input parameter of the comprised function belongs, a return value type of the function, and a method call in a function body;
the context information of the file associated with the first code comprises at least one of a variable name, structure information, an object name, an object definition, a member variable of a class, a member function of the class, a construction apparatus of the class, and an inheritance relationship of the class of the file associated with the first code;
the context information of the project in which the first code is located comprises statistics information or a type of a programming language of the project in which the first code is located; or
the context information of the test framework used for the first code comprises a type of the test framework used for the first code or a type of a mock framework.

15. The apparatus according to claim 13 or 14, wherein the obtaining module is specifically configured to:
when receiving the test command for the first code on a code editing interface, obtain the information about the first code, wherein the test command indicates to generate the test code for the first code based on the language model.

16. The apparatus according to any one of claims 13 to 15, wherein the first test code is obtained based on the information about the first code by using the language model, and the obtaining module is further configured to:
obtain information about second code, wherein the second code and the first code are of programming languages of different types; and
the processing module is further configured to obtain second test code based on the information about the second code by using the language model, wherein the first test code and the first code are of programming languages of a same type, and the second test code and the second code are of programming languages of a same type.

17. The apparatus according to any one of claims 13 to 16, wherein the processing module is further configured to:
update the language model based on the first test code and third test code corresponding to the first code, wherein the third test code is used as a truth value of the test code of the first code.

18. The apparatus according to claim 17, wherein the obtaining module is further configured to obtain a code set; and
the processing module is further configured to obtain a training sample of the language model based on the code set, wherein the training sample comprises the first code and the third test code that are extracted from the code set, the code set is adapted to a first test framework, the first test framework indicates a constraint of a test function that can be used as a to-be-tested function, the constraint comprises a constraint of the test function and a constraint of a call relationship between the test function and the to-be-tested function, the third test code meets the constraint of the test function, and a call relationship between the third test code and the first code meets the constraint of the call relationship.

19. A code testing apparatus, wherein the apparatus comprises:
an obtaining module, configured to receive a test command for first code, wherein the first code is code in a to-be-edited program, and the test command indicates to generate test code by using a language model; and obtain a second prompt, wherein the second prompt indicates the language model to extract information about the first code from a file of the first code, and generate test code of the first code based on the information about the first code; and the information about the first code comprises context information of a function comprised in the first code and one or more of the following information: context information of a file associated with the first code, the context information of the file associated with the first code, context information of a project in which the first code is located, or context information of a test framework used for the first code; and
a processing module, configured to obtain, based on the second prompt, first test code corresponding to the first code; and test the first code based on the first test code.

20. A compute device cluster, wherein the compute device cluster comprises at least one compute device, the at least one compute device comprises at least one processor and at least one memory, the at least one memory stores computer-readable instructions, and the at least one processor executes the computer-readable instructions, to enable the compute device cluster to perform the method according to any one of claims 1 to 12.

21. A computer-readable storage medium, comprising computer-readable instructions, wherein the computer-readable instructions are used to implement the method according to any one of claims 1 to 12.
